# EUROPÄISCHE PATENTSCHRIFT

(11) **EP 2 734 738 B1**
(45) Veröffentlichungstag und Bekanntmachung des Hinweises auf die Patenterteilung: **20.04.2016**
(21) Anmeldenummer: 12725766.5
(22) Anmeldetag: 05.06.2012
(51) Int. Cl.: F16B 5/06

(54) **BAUTEILVERBINDUNG SOWIE VERFAHREN ZUM VERBINDEN ZWEIER BAUTEILE**
COMPONENT CONNECTION AND A METHOD FOR CONNECTING TWO COMPONENTS
RACCORDEMENT DE COMPOSANTS AINSI QUE PROCÉDÉ DE RACCORDEMENT DE DEUX COMPOSANTS

(30) Priorität: 20.07.2011 DE 102011079483
(43) Veröffentlichungstag der Anmeldung: 28.05.2014
(73) Patentinhaber: Bayerische Motoren Werke Aktiengesellschaft, 80809 München (DE)
(72) Erfinder: VAN NIEKERK, Johann, 80993 München (DE); AHLERS, Michael, 80807 Muenchen (DE); HAMMER, Maik, 84174 Eching (DE)
(86) Internationale Anmeldenummer: PCT/EP2012/060545
(87) Internationale Veröffentlichungsnummer: WO 2013/010714

(56) Entgegenhaltungen:
- WO-A1-99/13231
- US-A- 3 188 731
- US-A- 5 542 158
- US-A1- 2004 187 289

## Beschreibung

Die vorliegende Erfindung betrifft eine Bauteilverbindung gemäß den Merkmalen des Patentanspruches 1 sowie ein Verfahren zum Verbinden zweier Bauteile gemäß den Merkmalen des Patentanspruches 2.

Eine Bauteilverbindung gemäß dem Oberbegriff des Patentanspruches 1 ist aus der WO 9913231 A1 bekannt.

Aus der WO 2011/029501 A1, die ebenfalls von der Anmelderin eingereicht wurde, ist ein Verfahren zum losen Vorfixieren zweier fest miteinander zu verbindender Bauteile bekannt, wobei ein erstes der beiden Bauteile ein davon abstehendes erstes Formschlusselement und ein zweites der beiden Bauteile ein mit dem ersten Formschlusselement zusammenwirkendes zweites Formschlusselement aufweist. Die beiden Bauteile werden so aneinandergesetzt, dass die beiden Formschlusselemente ineinandergreifen. Bei dem ersten Formschlusselement kann es sich um eine auf das erste Bauteil aufgeschweißte Kugel handeln.

Zum technischen Hintergrund der vorliegenden Erfindung zählen die US 3 188 731 A, US 2004 187289 A1 sowie die US 5 542 158 A.

Aufgabe der Erfindung ist es, eine Bauteilverbindung sowie ein Verfahren zum Verbinden zweier Bauteile zu schaffen, die bzw. das insbesondere für eine Mischbauweise, d.h. für die Verbindung zweier Bauteile, die aus unterschiedlichen Materialien bestehen, geeignet ist.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ersten Bauteil, von dem ein männliches Fixierelement absteht, und einem zweiten Bauteil, welches ein weibliches Fixierelement aufweist, das zur Aufnahme des am ersten Bauteil vorgesehenen männlichen Fixierelements vorgesehen ist.

Im Unterschied zu der eingangs erwähnten WO 2001/029501 A1 wirken die Fixierelemente der vorliegenden Erfindung nicht unmittelbar zusammen. Der Kern der vorliegenden Erfindung besteht in einem "hülsen- oder kappenartigen Clipelement", welches auf das männliche Fixierelement aufgesteckt ist. Das auf das männliche Fixierelement aufgesteckte Clipelement ist, wenn die beiden Bauteile miteinander verbunden bzw. zusammengesteckt sind, zwischen das männliche Fixierelemente und das an oder in dem zweiten Bauteil vorgesehene weibliche Fixierelement eingeklemmt. Eine Innenseite des Clipelements liegt also an einer Außenseite des männlichen Fixierelements an. Eine Außenseite des Clipelements liegt an einer Innenseite des weiblichen Fixierelements an. Über das hülsen- oder kappenartige Clipelement ist das an dem ersten Bauteil vorgesehene männliche Fixierelement somit reibschlüssig und/oder formschlüssig mit dem zweiten Bauteil verbunden.

Ein wesentlicher, hier sich hieraus ergebender Vorteil ist darin zu sehen, dass das Clipelement so gestaltet sein kann, dass das zweite Bauteil das erste Bauteil bzw. das daran vorgesehene männliche Fixierelement nicht berührt bzw. nicht kontaktiert. Da die beiden Bauteile aus unterschiedlichen Materialien bestehen, kann dadurch das Risiko von Kontaktkorrosion verringert werden. Das Clipelement besteht aus einem elektrisch nicht oder schlecht leitenden Material, nämlich Kunststoff.

Um eine hinreichende Klemmkraft zu erreichen, sollte das Clipelement ein Übermaß in Bezug auf das weibliche Fixierelement aufweisen. Sofern die Bauteile über die beiden Fixierelemente unverschieblich miteinander verbunden sein sollen, sollte das Clipelement in mindestens 2 Richtungen, die jeweils quer zu einer Einführrichtung, in der das männliche Fixierelement in das weibliche Fixierelement eingeführt wird, ein Übermaß aufweisen. Dies kann insbesondere durch kreisrunde Fixierelemente erreicht. Alternativ dazu könnte das weibliche Fixierelement auch als Langloch ausgeführt sein, was eine Relativverschiebung der beiden Bauteile in einer Längsrichtung des Langlochs ermöglicht, in Richtungen quer zur Längsrichtung des Langlochs die beiden Bauteile hingegen relativ zueinander fixiert.

Nach einer Weiterbildung der Erfindung ist an einem Außenumfang des Clipelements eine "Profilierung" vorgesehen. Die Profilierung kann z. B. in der Art einer Rändelung oder zahnartig oder in anderer Weise ausgebildet sein. Durch eine derartige Profilierung verbessert sich das Klemmvermögen des Clipelements in bzw. an dem weiblichen Fixierelement.

Vorzugsweise sollte das Clipelement, wenn es auf das erste Fixierelement aufgesteckt ist, das erste Fixierelement formschlüssig hintergreifen, so dass sich eine gewisse "Selbsthemmung" gegen unbeabsichtigtes Abziehen des Clipelements von dem männlichen Fixierelement ergibt.

Um ein Einführen bzw. Einstecken des auf das männliche Fixierelement des ersten Bauteils aufgesteckt Clipelement in das weibliche Fixierelement zu ermöglichen, sollte das Clipelement ein gewisses elastisches, zumindest aber ein gewisses plastisches Verformungsvermögen haben. Es kann vorgesehen sein, dass das Clipelement beim Einführen in das weibliche Fixierelement zumindest in einem Außenbereich elastisch und/oder plastisch verformt wird.

Ferner kann vorgesehen sein, dass das weibliche Fixierelement des zweiten Bauteils das Clipelement formschlüssig hintergreift, sich mit diesem verhakt oder daran einrastet.

Ferner kann vorgesehen sein, dass das Clipelement, sofern es kappenartig ausgebildet ist, so gestaltet ist, dass es das männliche Fixierelement vollständig überdeckt und unmittelbar bis an eine dem zweiten Bauteil zugewandte Seite des ersten Bauteils heranreicht bzw. an dieser Seite anliegt. Mit einem derartig gestalteten Clipelement kann zuverlässig verhindert werden, dass das zweite Bauteil das männliche Fixierelements berührt.

Das männliche Fixierelement ist vorzugsweise rotationssymmetrisch bezüglich einer Einführrichtung, in der es in das weibliche Fixierelement eingeführt wird, gestaltet. Das männliche Fixierelement kann insbesondere ganz oder teilweise die Form einer Kugel oder ganz oder teilweise eine kugelähnliche Form haben. Es kann z. B. als Kugelkalotte ausgebildet sein.

Das männliche Fixierelement wird auf das erste Bauteil aufgeschweißt. In Betracht kommen verschiedene Schweißverfahren, insbesondere aber Laserschweißen.

Wie bereits angedeutet bestehen die beiden Bauteile aus unterschiedlichen Materialien. Bei dem ersten Bauteil, handelt es sich beispielsweise um ein Metallbauteil, wie z. B. ein Blechbauteil. In Betracht kommen insbesondere Stahl- oder Aluminiumbauteile, wie sie z. B. im Fahrzeugkarosseriebau eingesetzt werden. Das männliche Fixierelement besteht aus dem selben Material wie das erste Bauteil, z. B. aus Stahl oder aus Aluminium.

Das zweite Bauteil ist aus einem anderen Material hergestellt sein, nämlich aus Kunststoff. Die Erfindung ist für "Mischverbindungen" geeignet, nämlich für Metall-Kunststoff-Verbindungen. Bei dem zweiten Bauteil kann es sich insbesondere um ein faserverstärktes Kunststoffbauteil handeln. In Betracht kommen insbesondere Kunststoffbauteile, deren Matrix Karbon- oder Glasfaserelemente enthält. Die Fasern können fein dispergiert im Kunststoff enthalten sein oder z. B. in der Form eines Geleges, einer Matte, eines Gewebes, eines Gestricks o.ä.

Die erfindungsgemäße Bauteilverbindung kann zum "Vorfixieren" zweier über mindestens eine weitere Bauteilverbindung miteinander zu verbindende Bauteile verwendet werden. Zwei miteinander zu verschweißende Bauteile können z. B. durch die erfindungsgemäße Bauteilverbindung relativ zu einander vorfixiert und anschließend stoffschlüssig, z. B. durch Verschweißen, Verkleben oder in anderer Weise (dauerhaft) miteinander verbunden werden.

Eingesetzt werden kann die Erfindung insbesondere im Fahrzeugkarosseriebau. Bei dem ersten und/oder dem zweiten Bauteil kann es sich z. B. um ein Fahrzeugbauteil, insbesondere um ein Karosseriebauteil handeln. Ausdrücklich erwähnt sei jedoch, dass die Erfindung auch in ganz anderen technischen Gebieten sehr vielfältig einsetzbar ist.

Zusammenfassend werden mit der Erfindung insbesondere folgende Vorteile erreicht:
- Die Erfindung ermöglicht ein "kaltes", sauberes Verbinden zweier Bauteile.
- Das Clipelement als isolator" genutzt werden kann, was eine elektrolytische bzw. galvanische Trennung der beiden miteinander zu verbindenden Bauteile ermöglicht.
- Das Verbinden der Bauteile ist technisch vergleichsweise einfach und daher gut automatisierbar.

Im folgenden wird die Erfindung im Zusammenhang mit der Zeichnung näher erläutert. Es zeigen:
Fig. 1 - 4 einzelne Schritte zum Verbinden zweier Bauteile
Fig. 1 zeigt ein erstes flächiges Bauteil 1, an dem ein männliches Fixierelement 2, das hier als Kugel ausgebildet ist, befestigt ist. Die Kugel 2 ist stoffschlüssig durch Verschweißen mit dem ersten Bauteil 1 verbunden. Bei dem ersten Bauteil 1 handelt es sich um ein Metallblech und bei der Kugel um eine aus demselben oder aus einem anderen Material bestehende Metallkugel.
Wie in Fig. 2 dargestellt ist, wird auf die Kugel 2 ein kappenartiges Clipelement 3 aufgesteckt. Das Clipelement 3 besteht aus einem Kunststoffmaterial. Es muss eine hinreichende Elastizität aufweisen, so dass es auf die Kugel 2 aufgesteckt werden kann. Wie aus
Fig. 2 ersichtlich ist, hintergreift das Clipelement 3 im aufgesteckten Zustand die Kugel 2, was einem unbeabsichtigten Abziehen bzw. einem selbsttätigen Herunterrutschen des Clipelements 3 von der Kugel 2 entgegenwirkt.

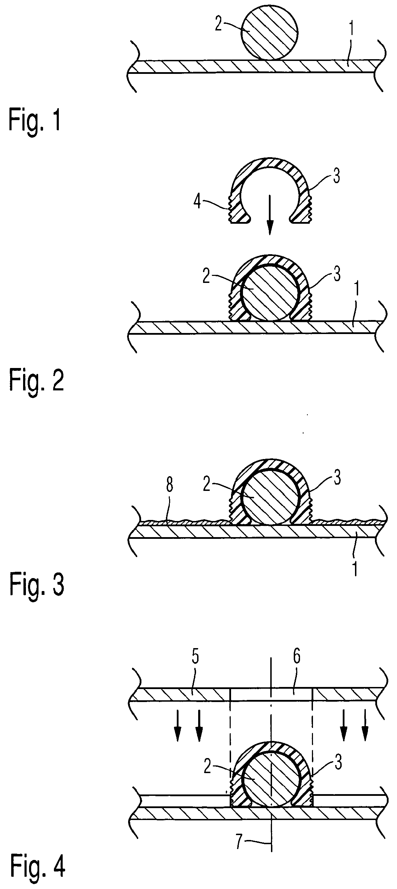

Wie aus Fig. 2 ersichtlich ist, ist an einem Außenumfang des Clipelements 3 eine umlaufende, zahnartige Profilierung 4 vorgesehen. Die Profilierung muss sich nicht notwendigerweise über den gesamten Außenumfang des Clipelements 3 erstrecken. Sie kann auch nur in bestimmten Bereichen oder abschnittsweise vorgesehen sein.

Anschließend kann ein zweites Bauteil 5, welches ein in dem hier gezeigten Ausführungsbeispiel als kreisrundes Loch 6 ausgebildetes, weibliches Fixierelement aufweist, in einer Einführrichtung 7 auf das auf die Kugel 2 aufgesteckte Clipelement 3 aufgeclipst werden.

Da das Clipelement 3 in Richtungen, die senkrecht zur Einführrichtung 7 sind, ein gewisses Übermaß in Bezug auf den Innendurchmesser des Lochs 6 aufweist, ergibt sich beim Zusammenstecken der beiden Bauteile 1, 5 eine Klemmkraft zwischen dem Clipelement 3 und dem Innenumfang des Lochs 6, wodurch die beiden Bauteile 1, 5 aneinandergeklemmt werden.

Wie in Fig. 3 angedeutet ist, können die beiden Bauteile 1, 5 zusätzlich über eine Kleberschicht 8 miteinander verklebt werden. Alternativ zu einer Klebeverbindung können die beiden Bauteile 1, 5 auch in anderer Weise dauerhaft fest miteinander verbunden werden, z. B. durch Verschweißen, insbesondere Remote-Laserschweißen, durch Verschrauben, Vernieten oder in anderer Weise.

## Patentansprüche

1. Bauteilverbindung mit einem ersten Bauteil (1), von dem ein männliches Fixierelement (2) absteht, welches aus demselben Material besteht wie das erste Bauteil (1) und ganz oder teilweise die Form einer Kugel hat, wobei das erste Bauteil mittels eines auf das männliche Fixierelement (2) aufgesteckten, hülsen- oder kappenartigen Clipelements (3) reibschlüssig und/oder formschlüssig mit einem zweiten Bauteil (5) verbunden ist, wobei das auf das männliches Fixierelement (2) aufgesteckte Clipelement (3) zwischen das männliche Fixierelement (2) und ein an oder in dem zweiten Bauteil (5) vorgesehenes weibliches Fixierelement (6) eingeklemmt ist,
**dadurch gekennzeichnet, dass**
• die beiden Bauteile (1, 5) aus unterschiedlichen Materialien bestehen, wobei
• das erste Bauteil (1) ein Metallbauteil, insbesondere ein Blechbauteil, ist,
• das männliche Fixierelement (2)
o mit dem ersten Bauteil (1) verschweißt worden ist, insbesondere durch Laserschweißen,
• das zweite Bauteil aus Kunststoff, insbesondere aus einem faserverstärkten Kunststoffmaterial besteht,
• das Clipelement (3) aus einem Kunststoffmaterial besteht.

2. Verfahren zum Verbinden zweier aus unterschiedlichen Materialien bestehender Bauteile (1, 5), mit folgenden Schritten:
- Bereitstellen eines ersten Bauteils (1) von dem ein männliches Fixierelement (2) absteht, wobei
- das erste Bauteil ein Metallbauteil, insbesondere ein Blechbauteil, ist,
- das männliche Fixierelement (2)
- aus demselben Material besteht wie das erste Bauteil (1), und
- ganz oder teilweise die Form einer Kugel hat,
- mit dem ersten Bauteil (1) verschweißt worden ist, insbesondere durch Laserschweißen,
- aufbringen, insbesondere Aufstecken oder Aufclipsen eines hülsen- oder kappenartigen Clipelements (3) auf das männliche Fixierelement (2), wobei das Clipelement (3) aus einem Kunststoffmaterial besteht,
- Bereitstellen eines zweiten Bauteils (5), das ein weibliches Fixierelement (6) aufweist, welches dazu vorgesehen ist, das Clipelement (3) aufzunehmen, wobei das zweite Bauteil aus Kunststoff, insbesondere aus einem faserverstärkten Kunststoffmaterial besteht,
- Verbinden der beiden Bauteile (1, 5), wobei das auf das männliche Fixierelement (2) aufgeclipste Clipelement (3) in das weibliche Fixierelement (6) eingeführt wird, wodurch die beiden Bauteile (1, 5) aneinander geklemmt werden.

3. Bauteilverbindung bzw. Verfahren nach Anspruch 1 bzvv. 2, **dadurch gekennzeichnet, dass** das Clipelement (3) das männliche Fixierelement (2) formschlüssig hintergreift.

4. Bauteilverbindung bzw. Verfahren nach einem der vorangehenden Ansprüche, **dadurch gekennzeichnet, dass** das Clipelement (3) quer zu einer Einführrichtung (7) in der das männliche Fixierelement (2) in das weibliche Fixierelement (6) eingeführt wird, ein Übermaß in Bezug auf das weibliche Fixierelement (6) aufweist.

5. Bauteilverbindung bzw. Verfahren nach einem der vorangehenden Ansprüche, **dadurch gekennzeichnet, dass** an einem Außenumfang des Clipelements (3) eine Profilierung (4) vorgesehen ist.

6. Bauteilverbindung bzw. Verfahren nach Anspruch 6, **dadurch gekennzeichnet, dass** die Profilierung (4) zahnartig ausgebildet ist.

7. Bauteilverbind bzw. Verfahren nach einem der vorangehenden Ansprüche, **dadurch gekennzeichnet, dass** das Clipelement (3) zumindest in einem Außenbereich beim Einführen in das weibliche Fixierelement (6) elastisch und/oder plastisch verformt wird.

8. Bauteilverbindung bzw. Verfahren nach einem der vorangehenden Ansprüche, **dadurch gekennzeichnet, dass** das Clipelement (3) kappenartig ausgebildet ist und das männliche Fixierelement (2) vollständig überdeckt und unmittelbar bis an eine dem zweiten Bauteil (5) zugewandte Seite des ersten Bauteils (1) heranreicht bzw. an dieser Seite des ersten Bauteils (1) anliegt.

9. Bauteilverbindung bzw. Verfahren nach einem der vorangehenden Ansprüche, **dadurch gekennzeichnet, dass** das erste Bauteil aus Stahl oder Aluminium besteht.

10. Bauteilverbindung bzw. Verfahren nach einem der Ansprüche 1 bis 9, **dadurch gekennzeichnet, dass** das zweite Bauteil Karbon- oder Glasfasern enthält.

11. Bauteilverbindung bzw. Verfahren nach einem der vorangehenden Ansprüche, **dadurch gekennzeichnet, dass** die beiden Bauteile (1, 5) zusätzlich stoffschlüssig verbunden werden, insbesondere durch Verschweißen oder Verkleben.

12. Bauteilverbindung bzw. Verfahren nach einem der vorangehenden Ansprüche, **dadurch gekennzeichnet, dass** mindestens eines der beiden Bauteile ein Fahrzeugbauteil, insbesondere ein Karosseriebauteil, ist.

## Claims

1. A component connection having a first component (1) from which a male fixing element (2) projects which comprises the same material as the first component (1) and is partly or completely in the form of a ball, wherein the first component is connected in a friction-locking and/or form-locking manner to a second component (5) by a sleeve-like or cap-like clip element (3) which is attached onto the male fixing elemerit (2), wherein the clip element (3) attached onto the male fixing element (2) is clamped between the male fixing element (2) and a female fixing element (6) provided on or in the second component (5), **characterised in that**
• the two components (1,5) comprise of different materials,
• the first component (1) being a metal component, especially a sheet metal component,
• the male fixing element (2)
o having been welded to the first component (1), especially by laser welding,
• the second component comprising plastics material, especially a fibre-reinforced plastics material,
• the clip element (3) comprising a plastics material.

2. A method for connecting two components (1, 5) comprising different materials, comprising the following steps:
- providing a first component (1) from which a male fixing element (2) projects, wherein
- the first component is a metal component, especially a sheet metal component,
- the male fixing element (2)
- comprising the same material as the first component (1), and
- is partly or completely in the form of a ball,
- has been welded to the first component (1), especially by laser welding,
- applying, especially attaching or clipping a sleeve-like or cap-like clip element (3) onto the male fixing element (2), the clip element (3) comprising a plastics material,
- providing a second component (5) which has a female fixing element (6) which is provided to receive the clip element (3), the second component comprising of plastics material, especially of a fibre-reinforced plastics material,
- connecting the two components (1, 5), wherein the clip element (3) clipped onto the male fixing element (2) is inserted into the female clip element (6), as a result of which the two components (1, 5) are clamped together.

3. A component connection or method according to claim 1 or claim 2, **characterised in that** the clip element (3) engages behind the mate fixing element (2) in a form-locking manner

4. A component connection or method according to any one of the preceding claims, **characterised in that** the clip element (3) has an excess with respect to the female fixing element (6) transversely to an insertion direction (7) in which the male fixing element (2) is inserted into the female fixing element (6).

5. A component connection or method according to any one of the preceding claims, **characterised in that** a profiling (4) is provided on an outer periphery of the clip element

6. A component connection or method according to claim 5, **characterised in that** the profiling, (4) is configured in a tooth-like manner.

7. A component connection or method according to any one of the preceding claims, **characterised in that** the clip element (3) is plastically and/or plastically deformed at least in an outer region when inserted into the female fixing element (6).

8. A component connection or method according to any one of the preceding claims, **characterised in that** the clip element (3) is formed in the manner of a cap and completely covers the male fixing element (2) and extends directly as far as a side of - the first component (1) facing the second component (5) or rests on this side of the first component (1).

9. A component connection or method according to any one of the preceding claims, **characterised in that** the first component comprises steel or aluminium.

10. A component connection or method according to any one of claims 1 to 9, **characterised in that** the second component contains carbon fibres or glass fibres.

11. A component connection or method according to any one of the preceding claims, **characterised in that** the two components (1, 5) are also connected integrally, especially by welding or adhesive bonding.

12. A component connection or method according to any one of the preceding claims, **characterised in that** at least one of the two components is a vehicle component, especially a vehicle body component.

## Revendications

1. Dispositif de liaison de deux pièces comprenant une première pièce (1) sur laquelle dépasse un élément de fixation mâle (2) qui est réalisé dans le même matériau que la première pièce (1) et a globalement ou partiellement la forme d'une sphère, la première pièce (2) étant reliée à une seconde pièce (5) par une liaison par friction et/ou par une liaison par la forme au moyen d'un élément de serrage (3) en forme de manchon ou de capuchon enfiché sur l'élément de fixation mâle (2), l'élément de serrage (3) enfiché sur l'élément de fixation mâle (2) étant bloqué entre cet élément de fixation mâle (2) et un élément de fixation femelle (6) monté sur ou dans la seconde pièce (5),
**caractérisé en ce que**
• les deux pièces (1, 5) sont réalisées en des matériaux différents,
• la première pièce (1) est une pièce en métal, en particulier une pièce en tôle,
• l'élément de fixation mâle (2) a été soudé sur la première pièce (1), en particulier par soudage laser,
• la seconde pièce est réalisée en un matériau synthétique, en particulier en un matériau synthétique renforcé par des fibres,
• l'élément de serrage (3) est réalisé en un matériau synthétique.

2. Procédé de liaison de deux pièces (1, 5) réalisées en des matériaux différents comprenant les étapes consistant à :
- se procurer une première pièce (1) sur laquelle dépasse un élément de fixation mâle (2),
- la première pièce étant une pièce métallique, en particulier une pièce en tôle,
- l'élément de fixation mâle (2),
- étant réalisé dans le même matériau que la première pièce (1), et
- ayant globalement ou partiellement la forme d'une sphère,
- ayant été soudé sur la première pièce (1), en particulier par soudage laser,
- mettre en place en particulier enficher ou clipser d'un élément de serrage (3) en forme de manchon ou de capuchon sur l'élément de fixation mâle (2), l'élément de serrage (3) étant réalisé en un matériau synthétique,
- se procurer une seconde pièce (5) comprenant un élément de fixation femelle (6) qui est susceptible de recevoir l'élément de serrage (3), la seconde pièce étant réalisée en un matériau synthétique, en particulier en un matériau synthétique renforcé par des fibres,
- relier les deux pièces (1, 5), l'élément de serrage (3) clipsé sur l'élément de fixation mâle (2) étant introduit dans l'élément de fixation femelle (6), de sorte que les deux pièces (1, 5) soient bloquées l'une sur l'autre.

3. Dispositif de liaison de pièces ou procédé conforme à l'une des revendications 1 et 2,
**caractérisé en ce que**
l'élément de serrage (3) vient en prise par une liaison par la forme en arrière de l'élément de fixation mâle (2).

4. Dispositif de liaison de pièces ou procédé conforme à l'une des revendications précédentes,
**caractérisé en ce que**
l'élément de serrage (3) comporte un excès par rapport à l'élément de fixation femelle (6) transversalement à la direction d'introduction (7) dans laquelle l'élément de fixation mâle (2) est introduit dans l'élément de fixation femelle (6).

5. Dispositif de liaison de pièce ou procédé conforme à l'une des revendications précédentes,
**caractérisé en ce qu'**
il est prévu un profilage (4) sur la périphérie externe de l'élément de serrage (3).

6. Dispositif de liaison de pièces ou procédé conforme à la revendication 6,
**caractérisé en ce que**
le profilage (4) est en forme de dents.

7. Dispositif de liaison de pièces ou procédé conforme à l'une des revendications précédentes,
**caractérisé en ce que**
l'élément de serrage (3) est déformé élastiquement et/ou plastiquement au moins dans une zone externe lors de son introduction dans l'élément de fixation femelle (6).

8. Dispositif de liaison de pièces ou procédé conforme à l'une des revendications précédentes,
**caractérisé en ce que**
l'élément de serrage (3) est réalisé en forme de capuchon, recouvre totalement l'élément de fixation mâle et arrive directement jusqu'à une face de la première pièce (1) tournée vers la seconde pièce (5), ou s'applique sur cette face de la première pièce (1).

9. Dispositif de liaison de pièces ou procédé conforme à l'une des revendications précédentes,
**caractérisé en ce que**
la première pièce est réalisée en acier ou en aluminium.

10. Dispositif de liaison de pièces ou procédé conforme à l'une des revendications 1 à 9,
**caractérisé en ce que**
la seconde pièce renferme des fibres de carbone ou des fibres de verre.

11. Dispositif de liaison de pièces ou procédé conforme à l'une des revendications précédentes,
**caractérisé en ce que**
les deux pièces (1, 5) sont en outre reliées par une liaison par la matière, en particulier par soudure ou collage.

12. Dispositif de liaison de pièces ou procédé conforme à l'une des revendications précédentes,
**caractérisé en ce qu'**
au moins l'une des deux pièces est un élément de véhicule, en particulier un élément de carrosserie.
